# FASCICULE DE BREVET EUROPEEN

(11) **EP 2 167 331 B1**
(45) Date de publication et mention de la délivrance du brevet: **02.03.2011**
(21) Numéro de dépôt: 08760332.0
(22) Date de dépôt: 02.06.2008
(51) Int. Cl.: B60C 19/00, B60C 11/01

(54) **DISPOSITIF REDUCTEUR DE PROJECTION D'EAU POUR PNEU**
VORRICHTUNG ZUR REDUZIERUNG DES SPRITZENS VON WASSER FÜR EINEN REIFEN
DEVICE FOR REDUCING WATER PROJECTION FOR A TYRE

(30) Priorité: 01.06.2007 FR 0703929
(43) Date de publication de la demande: 31.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: D'HARCOURT, Jean-Marc, 63000 Clermont-Ferrand (FR); HOUIS, Catherin, 63100 Clermont-Ferrand (FR)
(74) Mandataire: Diernaz, Christian
(86) Numéro de dépôt international: PCT/EP2008/056745
(87) Numéro de publication internationale: WO 2008/145751

(56) Documents cités:
- EP-A- 1 048 489
- FR-A- 2 214 602
- FR-E- 83 303

## Description

L'invention concerne les pneumatiques pour véhicules routiers de type poids lourd et en particulier les pneumatiques qui sont pourvus de dispositifs pour dévier les projections latérales d'eau lorsqu'un véhicule équipé desdits pneumatiques roule sur une chaussée recouverte d'eau.

Lors d'un roulage par temps de pluie, les manoeuvres de dépassement ou de croisement avec un véhicule poids lourd sont souvent très délicates pour les autres usagers compte tenu des quantités importantes d'eau qui peuvent être projetées latéralement par ledit véhicule et qui, en atteignant les pare-brise des autres véhicules, réduisent considérablement la visibilité des conducteurs de ces véhicules.

Un pneumatique pour poids lourd est de façon générale composé de deux bourrelets destinés à être en contact avec une jante de montage, d'un sommet pourvu d'une bande de roulement présentant une surface de roulement destinée à venir en contact avec le sol pendant le roulage et de deux flancs assurant la liaison entre cette bande de roulement et les bourrelets.

Un tel pneumatique est renforcé par une armature de carcasse s'étendant d'un bourrelet à l'autre et une armature de renforcement du sommet située radialement à l'extérieur de l'armature de carcasse, cette armature de sommet comprenant au moins deux nappes de renforts empilées c'est-à-dire placées les unes sur les autres. Chaque nappe de l'armature de sommet est en général composée d'une pluralité de renforts disposés de manière à faire un angle allant de 0° à 70° avec la direction circonférentielle, mais il n'est cependant pas exclu que l'angle des renforts puisse être supérieur à 70°.

La bande de roulement d'un pneumatique poids lourd est en général pourvue d'une sculpture formée d'éléments de relief délimités par des découpures (rainures et/ou incisions) destinées à conférer au pneumatique des performances d'adhérence sur route mouillée, en permettant notamment l'évacuation de l'eau.

Le pneumatique présente un encombrement de largeur maximale L mesuré au niveau de ses flancs lorsqu'il est monté sur sa roue de montage et soumis à ses conditions nominales d'utilisation de pression et de charge (L représente la distance maximale entre les points des flancs du pneu axialement les plus éloignés). Par axialement ou transversalement, on désigne dans la présente description une direction parallèle à l'axe de rotation du pneu monté sur jante.

Le brevet européen EP 1048489 décrit la mise en oeuvre d'un dispositif modifiant sensiblement la trajectoire des projections d'eau lors d'un roulage sur chaussée revêtue d'eau. Ce dispositif comprend, sur au moins un des flancs du pneumatique, au moins une nervure circonférentielle en mélange de caoutchouc.

Cette protubérance a pour rôle d'abaisser vers la chaussée la trajectoire du flux de liquide projeté par le roulage du pneu afin d'éviter que ce flux ne soit projeté trop en hauteur en formant des éclaboussures (*'splash'* en langue anglaise) gênant les autres usagers de la route.

La solution décrite dans ce brevet permet en outre de limiter les augmentations de températures à l'intérieur de la bande de roulement et notamment au voisinage des extrémités des nappes de renforcement de sommet.

Toutefois, il apparaît à l'usage que le dispositif décrit dans ce brevet peut encore être amélioré. En effet, il a été constaté que le flux dévié pouvait être perçu comme ayant trop de puissance et qu'il pouvait atteindre, transversalement à la trajectoire suivie par le pneu, des distances assez grandes.

Le pneumatique de l'invention cherche à améliorer cet état de fait en proposant une solution qui, tout en générant une déviation du flux de liquide en roulage sur chaussée revêtue d'eau, réduit la puissance de ce flux et réduit les distances maximales d'éjection du liquide dans la direction transversale.

Dans ce but, un pneumatique pour véhicule poids lourd selon l'invention comprend une bande de roulement destinée à venir en contact avec une surface de roulement sur la chaussée en roulage, des flancs prolongeant de part et d'autre la bande de roulement et, sur au moins l'un de ses flancs, une nervure pour modifier la trajectoire des projections d'eau dans le cas d'un roulage sur sol mouillé, cette nervure étant orientée dans la direction circonférentielle.

Cette nervure comprend une paroi externe formée d'une première partie et d'une seconde partie, la première partie s'étendant entre un flanc du pneumatique jusqu'à une ligne reliant les points de la nervure les plus à l'extérieur axialement, la seconde partie étant dans le prolongement de la première partie et s'étendant radialement vers l'extérieur jusqu'à un bord axialement externe de la bande de roulement.

Ce pneumatique est **caractérisé en ce que** la nervure pour modifier la trajectoire du flux est pourvue d'un dispositif réducteur de puissance, ce dispositif réducteur étant positionné sur la seconde partie de la paroi externe de la nervure et comprenant au moins une protubérance, faisant saillie sur cette seconde partie de la paroi externe, et disposée de manière à créer une perte de charge pour réduire la puissance des projections d'eau dans la direction transversale (c'est-à-dire dans une direction parallèle à l'axe de rotation du pneu) dans le cas d'un roulage sur sol revêtu d'eau. En outre, ladite au moins une protubérance coupe une droite virtuelle (T) tangente à la fois au bord (N1) axialement à l'extérieur de la bande de roulement et à la nervure sur laquelle est formée ladite au moins une protubérance.

Dans une variante intéressante, la au moins une protubérance du dispositif réducteur de puissance est formée par une pluralité de plots de section et de longueur appropriées pour créer une perte de charge des projections d'eau. Chaque plot est une élément allongé en matériau caoutchouc pouvant être de même nature que le matériau constituant la nervure circonférentielle prévue sur le flanc. Par élément allongé, il doit être compris que les dimensions maximales de sa section transversale sont au moins 1,5 fois inférieures à la hauteur de l'élément.

Avantageusement les plots sont orientés suivant une direction radiale (ou sensiblement radiale) - c'est-à-dire dans une direction perpendiculaire à l'axe de rotation - et ils ont une longueur suffisante pour avoir un effet de réduction de puissance des projections de fluide. Ils peuvent toucher ou non la chaussée en roulage quand le pneu est neuf et que ce dernier porte sa charge nominale et est gonflé à sa pression nominale.

Dans une variante intéressante pour augmenter la perte de charge sans toutefois bloquer l'éjection de l'eau, les plots sont disposés suivant au moins deux lignes circonférentielles sur la seconde partie de la paroi externe de la nervure, les plots d'une ligne étant décalés circonférentiellement par rapport aux plots d'une ligne voisine de manière à créer un grand nombre d'obstacles à la circulation de l'eau lors d'un roulage sur sol revêtu d'eau.

Des formes variées de sections peuvent être utilisées pour les plots et notamment des formes circulaires, quadrangulaires, triangulaires.

Chaque plot peut avoir une section constante ou bien variable dans le sens de sa hauteur ; par exemple, on peut concevoir des plots présentant des sections dont la surface de section augmente en se rapprochant de la paroi de la nervure circonférentielle. Il est également possible de prévoir des plots dont la surface de section diminue en se rapprochant de la paroi de la nervure circonférentielle afin d'avoir une rigidité de flexion sensiblement constante après usure partielle des plots pendant le roulage.

Avantageusement le taux de vide des protubérances du dispositif réducteur de puissance mesuré en projection sur un plan perpendiculaire à l'axe de rotation est au plus égal à 15% de la surface totale des plots projetée sur le même plan. Ce taux de vide représente en fait l'espace non occupé par un ou des plots au travers duquel un flux peut passer sans être dévié. Un taux de vide égal à 0% signifie qu'il n'existe pas de passage libre entre les plots dans une direction parallèle à l'axe de rotation. Plus ce taux augmente et moins le flux est perturbé par les plots. On a constaté qu'au delà de 15% le taux de vide est trop important pour obtenir un effet sensible de réduction de puissance du flux.

Dans une autre variante de réalisation, un pneumatique selon l'invention est **caractérisé en ce que** la au moins une protubérance du dispositif réducteur de puissance est formée par au moins une bande dont les dimensions de section transversale (vue dans un plan de coupe méridien, c'est-à-dire dans un plan quelconque contenant l'axe de rotation) sont telles que, sous l'action des projections d'eau, ladite bande subisse une déformation de flexion, la au moins une bande ayant une orientation principale circonférentielle afin de réduire la puissance des projections d'eau dans la direction transversale dans le cas d'un roulage sur sol revêtu d'eau. Par orientation principale circonférentielle, on entend ici que cette bande peut être formée en zigzag tout en faisant le tour complet du pneu (autour de l'axe de rotation dudit pneu).

Dans une autre variante, le pneumatique est **caractérisé en ce que** au moins une bande est continue dans la direction circonférentielle (dans le présent cas, cette bande peut être rectiligne ou bien en zigzag). Préférentiellement, la bande est discontinue, c'est-à-dire formée par une succession de petites bandelettes disposées dans la direction circonférentielle, afin d'être moins sensible à des agressions externes (notamment choc contre un trottoir).

Dans une autre variante intéressante, le dispositif réducteur de puissance des projections d'eau est formé par une pluralité de bandelettes circonférentielles discontinues disposées selon des lignes circonférentielles, les bandelettes d'une ligne étant décalées circonférentiellement par rapport aux bandelettes d'une autre ligne.

Dès lors que le pneumatique comprend une armature de renforcement du sommet située radialement à l'extérieur de l'armature de carcasse, cette armature de sommet comprenant au moins deux nappes superposées, chaque nappe étant pourvue de renforts sous la forme de fils ou câbles, il est judicieux d'appliquer l'enseignement du brevet EP 1048489 B1. Dans ce cas, chaque nervure de déviation de flux répond aux critères énoncés dans ce brevet.

De cette manière, il est en effet possible à la fois d'obtenir une réduction sensible de la puissance des projections d'eau tout en limitant les élévations de température au voisinage des extrémités de nappes consécutives à l'ajout de matière caoutchouteuse.

Préférentiellement, les pneumatiques selon l'invention sont montés sur l'essieu avant des véhicules.

L'invention sera mieux comprise à l'aide des figures jointes à la présente description et montrant des variantes données à titre d'exemples non limitatifs :

- la figure 1 montre une coupe méridienne schématique d'une partie d'un pneumatique pour véhicule poids lourd comprenant une nervure déviant les projections d'eau sur un de ses flancs, cette nervure comprenant un dispositif réducteur selon l'invention ;

- la figure 2 montre, en élévation, la variante montrée à la figure 1

- la figure 3 montre la variante de la figure 1 dans la configuration de roulage sur chaussée revêtue d'eau ;

- la figure 4 montre un autre variante de dispositif réducteur selon l'invention formé d'une pluralité de bandelettes ;

- la figure 5 montre un autre variante de dispositif réducteur selon l'invention formé d'une bande en zigzag ;

- la figure 6 montre une autre variante dispositif réducteur dans un plan de coupe méridien, selon laquelle les plots ont une section variable croissante ;

- la figure 7 montre une autre variante de l'invention dans un plan de coupe méridien, selon laquelle les plots du dispositif réducteur sont orientés dans une direction sensiblement parallèle à la direction axiale XX'.

- la figure 8 montre les projections des plots de la variante représentée à la figure 1 sur un plan perpendiculaire à l'axe de rotation.

Pour faciliter la lecture des figures avec leur description correspondante, les mêmes éléments structurels représentés sur ces figures sont désignés par les mêmes signes de références.

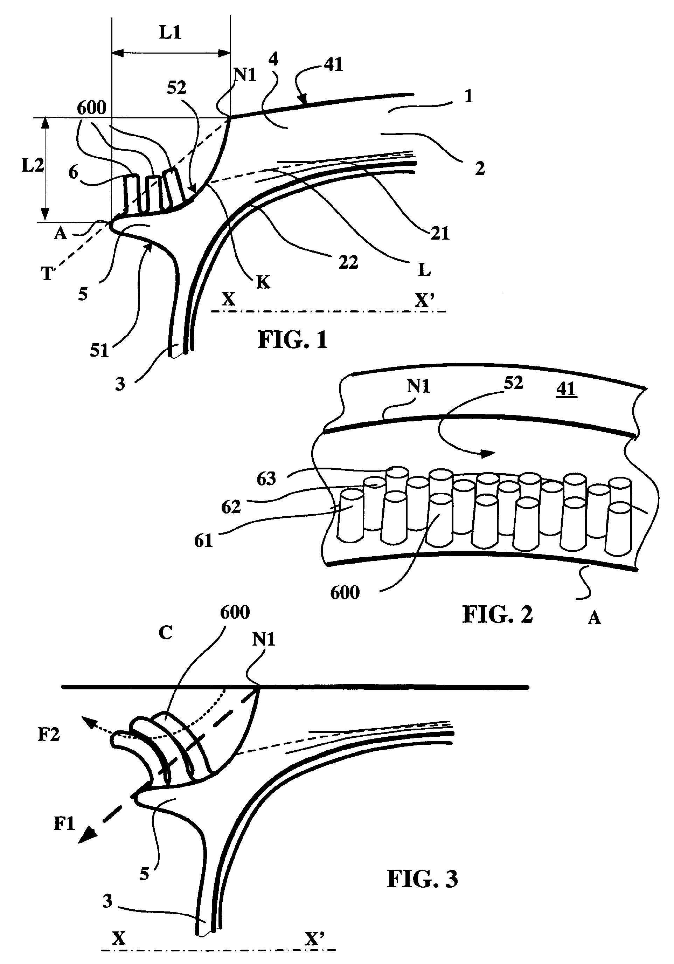

La figure 1 représente une coupe partielle d'un pneumatique 1 pour véhicule poids lourd selon l'invention réalisée dans un plan de coupe méridien, c'est-à-dire dans un plan contenant l'axe de rotation dudit pneumatique (cet axe est parallèle à la direction montrée par la droite XX' sur cette figure 1). Ce pneumatique 1 de dimension 385/55 R 22.5 comprend une région de sommet 2 reliée à des bourrelets (non montrés ici) par des flancs 3. Le sommet 2 du pneumatique comprend une bande de roulement 4 comportant une surface de roulement 41 radialement à l'extérieur, cette surface de roulement étant destinée à venir en contact avec la chaussée pendant le roulage du pneumatique. Cette surface 41 se termine axialement par une ligne dont l'intersection avec le plan de coupe correspond à un point N1 ; vu dans le plan de coupe de la figure, le point N1 correspond au point axialement le plus à l'extérieur de l'empreinte de contact de la surface de roulement 41 sous les conditions nominales d'usage du pneumatique.

Sur le flanc 3 on distingue une nervure 5 en saillie vers l'extérieur du pneu (par définition, l'intérieur du pneu correspond à la cavité du pneu dans laquelle s'exerce la pression de gonflage). La nervure 5 est dans le cas présent réalisée par moulage au moment du moulage et de la vulcanisation du pneumatique 1.

La nervure 5 comprend une paroi externe formée d'une première partie 51 de paroi et d'une seconde partie 52 de paroi, la première partie 51 s'étendant entre le flanc 3 du pneu jusqu'à une ligne reliant les points A de la nervure les plus à l'extérieur axialement, la seconde partie 52 étant dans le prolongement de la première partie 51 et s'étendant radialement vers l'extérieur jusqu'au bord axialement externe N1 de la surface de roulement 41.

En outre, le pneu 1 est pourvu, sur la nervure 5, d'un dispositif 6 réducteur de puissance des projections latérales d'eau lors d'un roulage sur chaussées revêtue d'eau. Ce dispositif 6 est constitué par trois lignes circonférentielles 61, 62, 63 de plots de caoutchouc 600. Ces plots 600 prennent naissance sur la seconde partie 52 de paroi de la nervure et sont orientés sensiblement dans une direction radiale (c'est-à-dire dans une direction perpendiculaire à l'axe de rotation du pneu). La ligne 61 de plots 600 axialement la plus à l'extérieur est positionnée près de la partie axialement la plus à l'extérieur de la nervure (correspondant au point A sur le dessin). Les plots 600 ont sensiblement tous la même hauteur et sont de section transversale de forme circulaire et ont les dimensions suivantes : diamètre égal à 3.5 mm, hauteur égale à 11 mm).

La hauteur des plots 600 est telle que lesdits plots coupent, dans le plan de coupe, une droite virtuelle T passant par le point N1 axialement le plus à l'extérieur de la surface de roulement 41 de la bande de roulement, cette droite T étant tangente à la nervure 5 située axialement à l'extérieur du point N1.

Dans le cas présenté, la distance axiale L1 séparant le point N1 axialement le plus à l'extérieur de la surface de roulement 41 du point A axialement le plus à l'extérieur de la nervure 5 est égale à 30 mm tandis que la distance radiale L2 entre ce point A et le point N1 est égale à 31 mm. La hauteur des plots 600 est égale à 11 mm. Le diamètre de chaque plot est sensiblement égal à 3.5 mm à une extrémité et 5 mm à l'autre extrémité (le diamètre le plus grand étant situé près de la surface externe 52 de la nervure 5). Le pas moyen entre les plots est de 9 mm.

Comme le montre la figure 2, représentant en élévation une vue partielle de la nervure de la figure 1, les plots 600 sont disposés suivant des lignes circonférentielles 61, 62, 63 de manière à ce que les plots d'une ligne soient décalés circonférentiellement des plots des lignes voisines pour augmenter l'effet de perte de charge. Le taux de vide est ici de l'ordre de 15%.

Comme cela est visible sur la figure 3, la présence d'une nervure 5 permet d'orienter différemment les projections latérales d'eau lors du roulage du pneu sur une chaussée C revêtue d'eau (l'orientation est indiquée par une flèche F1) et la présence des plots 600 permet de réduire de manière très perceptible la puissance de ces projections, une partie desdites projections se trouvant plus ou moins rabattues vers la chaussée (comme l'indique la flèche F2).

Avantageusement, les plots sont raccordés à la nervure par des rayons de raccordement appropriés limitant les concentration de contraintes liées aux flexions répétées pour éviter un arrachement des plots. Préférentiellement, le profil de raccordement a un rayon de courbure au moins égal à 1 mm.

Bien entendu pour bénéficier des effets de l'invention en roulage, le pneu selon l'invention est monté sur un véhicule de façon que le flanc pourvu d'une nervure et d'un dispositif de réduction de puissance des projections soit placé côté extérieur dudit véhicule.

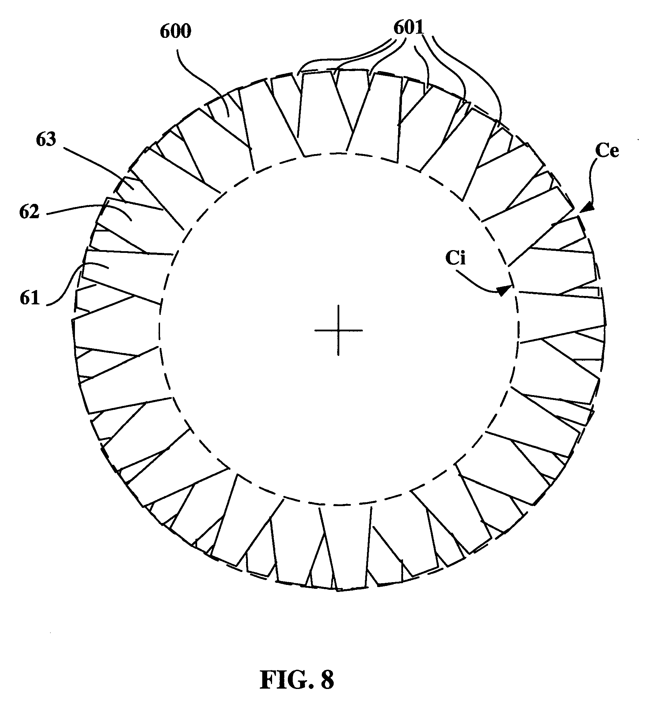

La figure 8 montre sur un plan perpendiculaire à l'axe de rotation les projections des plots 61, 62, 63 du dispositif réducteur 600. Dans cette variante, il existe des espaces 601 qui ne sont pas bouchés par au moins un plot et qui laissent passer le flux de liquide éjecté au cours du roulage selon une direction perpendiculaire au plan de la figure (c'est-à-dire parallèle à la direction de l'axe de rotation). Le rapport de la somme de tous ces espaces 601 à la surface totale de la couronne délimitée par un cercle interne Ci et un cercle externe Ce est inférieur à 20%. Dans la variante montrée, ce rapport est égal à 16%. Le cercle interne Ci passe par la partie radialement la plus à l'intérieur des plots, tandis que le cercle externe Ce passe par la partie radialement la plus à l'extérieur des plots.

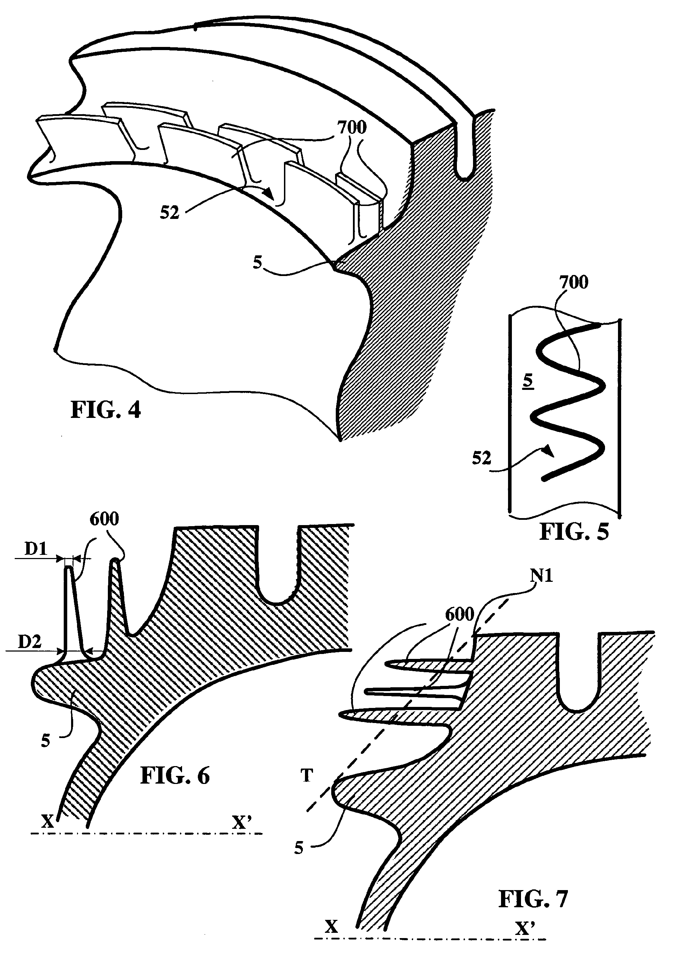

Une autre variante est montrée avec la figure 4. Dans cette variante, la nervure 5 est pourvue d'un dispositif réducteur de puissance composé de deux lignes circonférentielles de protubérances 700 en saillie sur la seconde partie 52 de la paroi externe de la nervure 5, chacune des ces protubérances 700 étant une bandelette de caoutchouc moulée pendant le moulage du pneu. Chaque bandelette a des dimensions appropriées pour permettre une flexion appropriée sous l'action des projections d'eau lors d'un roulage sur chaussée revêtue d'eau. Chaque ligne comporte une pluralité de bandelettes disposées sensiblement dans la direction circonférentielle (leur plus grande dimension est dans la direction circonférentielle).

Dans une variante montrée avec la figure 5, on peut voir en élévation une partie d'une nervure 5 comportant sur sa surface externe 52 un dispositif réducteur de puissance de flux formé d'une bande continue 700, en zigzag et s'étendant dans la direction circonférentielle (le taux de vide est ici de 0%). Cette bande continue 700 pourrait avantageusement être incisée dans la direction radiale sur tout ou partie de sa hauteur radiale ou bien encore pourvue d'une pluralité d'orifices pour laisser passer une partie seulement du flux.

Dans la variante montrée à la figure 6, une nervure 5 est pourvue de plots 600 dont la surface de section augmente régulièrement en se rapprochant de la paroi radialement externe de la nervure 5. La section de chaque plot est circulaire et a un diamètre minimal D1 à l'extrémité libre du plot, tandis qu'elle a un diamètre maximal D2 près de la surface de paroi de la nervure 5. Dans le cas montré, la base des plots présente une région de raccordement avec la nervure pour assurer un bon ancrage du plot et éviter les concentrations d'efforts.

Avantageusement, la seconde partie de la paroi externe de la nervure a une courbure transversale (mesurée dans un plan de coupe contenant l'axe de rotation) telle que vue de l'extérieur cette seconde partie présente une concavité faisant face au sol pendant le roulage. Pour les dimensions usuelles de pneus poids lourd, le rayon moyen de cette courbure (pris dans un plan de coupe contenant l'axe de rotation) est compris entre 10 et 25 mm.

Dans une autre variante, montrée avec la figure 7, les protubérances sous la forme de plots 600 peuvent être placées au voisinage de la ligne d'arête axialement externe de la surface de roulement de la bande de roulement (coupant le plan de la figure au point N1), ces protubérances étant orientées dans une direction sensiblement parallèle à la direction axiale XX'. Ces protubérances 600 ont une longueur dans la direction axiale qui est suffisante pour couper une droite virtuelle T tracée dans le plan du dessin et passant par le point N1 et tangente à la nervure 5.

L'invention n'est pas limitée aux exemples décrits et représentés et diverses modifications peuvent y être apportées sans sortir de son cadre. Toutes les variantes décrites mettent en oeuvre une nervure circonférentielle continue ; il est bien sûr possible de mouler une nervure circonférentielle discontinue comme une succession de portions de nervure, chaque portion de nervure étant pourvue d'un dispositif réducteur de puissance de jet selon l'invention.

## Revendications

1. Pneumatique (1) ayant une bande de roulement (4), des flancs (3) prolongeant les bords de la bande de roulement et, sur au moins l'un de ses flancs, une nervure (5) pour modifier la trajectoire des projections d'eau dans le cas d'un roulage sur sol mouillé, cette nervure (5) étant orientée dans la direction circonférentielle, cette nervure (5) comprenant une paroi externe formée d'une première partie (51) et d'une seconde partie (52), la première partie (51) s'étendant entre un flanc (3) du pneumatique jusqu'à une ligne reliant les points(A) de la nervure (5) les plus à l'extérieur axialement, la seconde partie (52) étant dans le prolongement de la première partie (51) et s'étendant radialement vers l'extérieur jusqu'à un bord axialement externe de la bande de roulement (N1), ce pneumatique étant **caractérisé en ce que** la nervure (5) comprend un dispositif réducteur de puissance (6), ce dispositif réducteur (6) étant positionné sur la seconde partie (52) de la paroi externe de la nervure et comprenant au moins une protubérance (600, 700) disposée de manière à créer une perte de charge afin de réduire la puissance des projections d'eau dans la direction transversale dans le cas d'un roulage sur sol revêtu d'eau, ladite au moins une protubérance coupant une droite virtuelle (T) tangente à la fois au bord (N1) axialement à l'extérieur de la bande de roulement et à la nervure (5) sur laquelle est formée ladite au moins une protubérance.

2. Pneumatique (1) selon la revendication 1 **caractérisé en ce que** la au moins une protubérance du dispositif réducteur de puissance est formée par une pluralité de plots de section et de longueur appropriées pour générer une perte de charge des projections d'eau.

3. Pneumatique selon la revendication 2 **caractérisé en ce que** les plots (600) sont disposés suivant au moins deux lignes circonférentielles (61, 62, 63) sur la seconde partie (52) de la paroi externe de la nervure (5), les plots d'une ligne étant décalés par rapport aux plots d'une ligne voisine de manière à créer un grand nombre d'obstacles à la circulation de l'eau lors d'un roulage sur sol revêtu d'eau.

4. Pneumatique selon l'une des revendications 1 à 3 **caractérisé en ce que** le taux de vide des protubérances (600, 700) du dispositif réducteur de puissance (6) mesuré en projection sur un plan perpendiculaire à l'axe de rotation est au plus égal à 15% de la surface totale des plots projetée sur le même plan.

5. Pneumatique selon l'une des revendications 1 à 4 **caractérisé en ce que** les plots (600) présentent des sections transversales dont la surface croît en se rapprochant de la paroi (52) de la nervure circonférentielle (5).

6. Pneumatique selon la revendication 1 **caractérisé en ce que** la au moins une protubérance du dispositif réducteur de puissance (6) est formée par au moins une bande (700) dont les dimensions de la section vue dans un plan de coupe méridien sont telles que, sous l'action du flux d'eau, ladite bande (700) subit une déformation de flexion, la au moins une bande ayant une orientation principale circonférentielle afin de réduire la puissance des projections d'eau dans la direction transversale dans le cas d'un roulage sur sol revêtu d'eau.

7. Pneumatique selon la revendication 6 **caractérisé en ce que** le dispositif réducteur de puissance de jet (6) est formé par une pluralité de bandelettes (700) circonférentielles discontinues disposées suivant des lignes circonférentielles, les bandelettes d'une ligne étant décalées circonférentiellement par rapport aux bandelettes d'une autre ligne, et **en ce que** le taux de vide des bandelettes (700) du dispositif réducteur de puissance (6) mesuré en projection sur un plan perpendiculaire à l'axe de rotation est au plus égal à 15% de la surface totale des plots projetée sur le même plan.

8. Pneumatique selon la revendication 6 **caractérisé en ce que** le dispositif réducteur de puissance de jet (6) est formé par au moins une pluralité de bande (700) ayant une forme en zigzag et orientée dans la direction circonférentielle.

## Claims

1. Tyre (1) having a tread (4), sidewalls (3) extending the edges of the tread and, on at least one of its sidewalls, a rib (5) for modifying the path of the expelled water in the case of the tyre running on wet ground, this rib (5) being directed circumferentially and comprising an external wall formed from a first part (51) and from a second part (52), the first part (51) extending between a sidewall (3) of the tyre as far as a line joining the axially outermost points (A) of the rib (5), the second part (52) being in the extension of the first part (51) and extending radially outwards as far as an axially external edge (N1) of the tread, this tyre being **characterized in that** the rib (5) includes a power-reducing device (6), said power-reducing device (6) being positioned on the second part (52) of the external wall of the rib and comprising at least one protuberance (600, 700) placed so as to create a pressure drop so as to reduce the power of the water expelled in the transverse direction in the case of the tyre running on water-covered ground, said at least one protuberance intersecting a virtual line (T) tangential to both the axially outer edge (N1) of the tread and the rib (5) on which said at least one protuberance is formed.

2. Tyre (1) according to Claim 1, **characterized in that** the at least one protuberance of the power-reducing device is formed by a plurality of studs of appropriate cross section and of appropriate length so as to generate a pressure drop in the expelled water.

3. Tyre according to Claim 2, **characterized in that** the studs (600) are placed in at least two circumferential lines (61, 62, 63) on the second part (52) of the external wall of the rib (5), the studs of one line being offset relative to the studs of a neighbouring line so as to create a large number of obstacles to the flow of water when the tyre is running on water-covered ground.

4. Tyre according to one of Claims 1 to 3, **characterized in that** the void content of the protuberances (600, 700) of the power-reducing device (6), measured when projected on a plane perpendicular to the rotation axis, is at most equal to 15% of the total area of the studs projected on the same plane.

5. Tyre according to one of Claims 1 to 4, **characterized in that** the studs (600) have cross sections that increase in area upon coming closer to the wall (52) of the circumferential rib (5).

6. Tyre according to Claim 1, **characterized in that** the at least one protuberance of the power-reducing device (6) is formed by at least one strip (700), the dimensions of the cross section of which, seen in a meridian section plane, are such that, under the action of the water stream, said strip (700) deforms in bending, the at least one strip having a circumferential main orientation so as to reduce the power of the water expelled in the transverse direction in the case of the tyre running on water-covered ground.

7. Tyre according to Claim 6, **characterized in that** the device (6) for reducing the power of the jet is formed by a plurality of discontinuous circumferential tabs (700) placed in circumferential rows, the tabs of one line being circumferentially offset relative to the tabs of another row and **in that** the void content of the tabs (700) of the power-reducing device (6), measured when projected on a plane perpendicular to the rotation axis, is at most equal to 15% of the total area of the studs projected on the same plane.

8. Tyre according to Claim 6, **characterized in that** the device (6) for reducing the power of the jet is formed by at least one plurality of strips (700) having a zigzag shape and oriented in the circumferential direction.

## Patentansprüche

1. Luftreifen (1), der einen Laufstreifen (4), die Ränder des Laufstreifens verlängernde Flanken (3), und auf mindestens einer seiner Flanken eine Rippe (5) hat, um die Bahn der Wasserspritzer im Fall eines Fahrens auf nassem Boden zu verändern, wobei diese Rippe (5) in Umfangsrichtung ausgerichtet ist, wobei diese Rippe (5) eine Außenwand enthält, die von einem ersten Bereich (51) und von einem zweiten Bereich (52) gebildet wird, wobei der erste Bereich (51) sich von einer Flanke (3) des Luftreifens bis zu einer Linie erstreckt, die die axial am weitesten außen liegenden Punkte (A) der Rippe (5) verbindet, wobei der zweite Bereich (52) sich in der Verlängerung des ersten Bereichs (51) befindet und sich radial nach außen bis zu einem axial äußeren Rand (N1) des Laufstreifens erstreckt, wobei dieser Luftreifen **dadurch gekennzeichnet ist, dass** die Rippe (5) eine Kraftreduziervorrichtung (6) enthält, wobei diese Reduziervorrichtung (6) auf dem zweiten Bereich (52) der Außenwand der Rippe positioniert ist und mindestens einen Vorsprung (600, 700) enthält, der so angeordnet ist, dass ein Druckverlust erzeugt wird, um die Kraft der Wasserspritzer in der Querrichtung im Fall eines Fahrens auf einem wasserbedeckten Boden zu reduzieren, wobei der mindestens eine Vorsprung eine virtuelle Gerade (T) schneidet, die sowohl den axial äußeren Rand (N1) des Laufstreifens als auch die Rippe (5) tangiert, auf der der mindestens eine Vorsprung geformt ist.

2. Luftreifen (1) nach Anspruch 1, **dadurch gekennzeichnet, dass** der mindestens eine Vorsprung der Kraftreduziervorrichtung von einer Vielzahl von Blöcken mit geeignetem Querschnitt und Länge geformt wird, um einen Druckverlust der Wasserspritzer zu erzeugen.

3. Luftreifen nach Anspruch 2, **dadurch gekennzeichnet, dass** die Blöcke (600) gemäß mindestens zwei Umfangslinien (61, 62, 63) auf dem zweiten Bereich (52) der Außenwand der Rippe (5) angeordnet sind, wobei die Blöcke einer Linie bezüglich der Blöcke einer benachbarten Linie so versetzt sind, dass eine große Anzahl von Hindernissen für den Kreislauf des Wassers bei einem Fahren auf einem wasserbedeckten Boden erzeugt wird.

4. Luftreifen nach einem der Ansprüche 1 bis 3, **dadurch gekennzeichnet, dass** der Lückengrad der Vorsprünge (600, 700) der Kraftreduziervorrichtung (6), gemessen in Projektion auf eine Ebene lotrecht zur Drehachse, höchstens gleich 15% der Gesamtfläche der Klötze projiziert auf die gleiche Ebene ist.

5. Luftreifen nach einem der Ansprüche 1 bis 4, **dadurch gekennzeichnet, dass** die Blöcke (600) Querschnitte aufweisen, deren Fläche bei Annäherung an die Wand (52) der Umfangsrippe (5) zunimmt.

6. Luftreifen nach Anspruch 1, **dadurch gekennzeichnet, dass** der mindestens eine Vorsprung der Kraftreduziervorrichtung (6) von mindestens einem Band (700) geformt wird, dessen Abmessungen des Querschnitts, gesehen in einer Meridianschnittebene, derart sind, dass das Band (700) unter der Einwirkung des Wasserflusses eine Biegeverformung erfährt, wobei das mindestens eine Band eine Hauptumfangsrichtung hat, um die Kraft der Wasserspritzer in Querrichtung im Fall eines Fahrens auf wasserbedecktem Boden zu reduzieren.

7. Luftreifen nach Anspruch 6, **dadurch gekennzeichnet, dass** die Strahlkraftreduziervorrichtung (6) von einer Vielzahl von diskontinuierlichen Umfangsstreifen (700) geformt wird, die gemäß Umfangslinien angeordnet sind, wobei die Streifen einer Linie in Umfangsrichtung bezüglich der Streifen einer anderen Linie versetzt sind, und dass der Lückengrad der Streifen (700) der Kraftreduziervorrichtung (6), gemessen in Projektion auf eine Ebene lotrecht zur Drehachse, höchstens gleich 15% der Gesamtfläche der Streifen projiziert auf die gleiche Ebene ist.

8. Luftreifen nach Anspruch 6, **dadurch gekennzeichnet, dass** die Strahlkraftreduziervorrichtung (6) von mindestens einem Band (700) geformt wird, das eine Zickzackform hat und in Umfangsrichtung ausgerichtet ist.
